# EUROPEAN PATENT SPECIFICATION

(11) **EP 2 571 374 B1**
(45) Date of publication and mention of the grant of the patent: **04.03.2015**
(21) Application number: 11714582.1
(22) Date of filing: 18.04.2011
(51) Int. Cl.: A23D 7/005, A23D 7/015, A23L 1/30

(54) **EDIBLE FAT CONTINUOUS SPREADS**
ESSBARE AUFSTRICHE MIT KONTINUIERLICHER FETTPHASE
TARTINAGE CONTINU DE GRAS COMESTIBLE

(30) Priority: 18.05.2010 EP 10163048
(43) Date of publication of application: 27.03.2013
(73) Proprietor: Unilever N.V., 3013 AL Rotterdam (NL); Unilever PLC, London, Greater London EC4Y 0DY (GB)
(72) Inventor: BELTMAN, Robert, NL-3133 AT Vlaardingen (NL); HUSKEN, Henk, NL-3133 AT Vlaardingen (NL); JACOBS, Renate, Gemma, Jacobina, Maria, NL-3133 AT Vlaardingen (NL); SMIT-KINGMA, Irene, Erica, NL-3133 AT Vlaardingen (NL); VELIKOV, Krassimir, Petkov, NL-3133 AT Vlaardingen (NL)
(74) Representative: Corsten, Michael Allan
(86) International application number: PCT/EP2011/056161
(87) International publication number: WO 2011/144405

(56) References cited:
- EP-B1- 0 897 671
- WO-A1-00/45648
- WO-A1-2008/125380
- WO-A2-00/41491
- US-B1- 6 352 737

## Description

### Field of the invention

The invention relates to edible fat continuous spreads, in particular to edible fat continuous spreads comprising plant sterol and process for making

### Background prior art

Edible fat continuous spreads like e.g. margarine and low fat spreads are well known food products that comprise a continuous fat phase and a dispersed aqueous phase. The fat phase comprises liquid oil and structuring fat (also known as hard stock). The liquid oil is liquid at room temperature. The structuring fat is solid at room temperature and serves to structure the fat phase and helps to stabilize the emulsion.

The liquid oil fraction typically comprises liquid unmodified vegetable oil such as soybean oil, sunflower oil, low erucic rapeseed oil (Canola), corn oil or blends of vegetable oils.

For an edible fat continuous spread, ideally the structuring fat has such properties that it melts or dissolves at mouth temperature. Otherwise the product may have a heavy and/or waxy mouthfeel. Furthermore, the overall organoleptic impression should be smooth and preferable no perceivable grains should be present upon ingestion as this may result in what is generally known as a 'sandy mouthfeel'.

Other important aspects of an edible fat continuous spread are for example hardness, spreadability, storage stability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion, oil-exudation or crystal growth).

Plant sterols are well known cholesterol lowering agents. The benefit of these ingredients to reduce the risk to cardiovascular diseases has been established for many years. Where these active ingredients were initially available in the form of capsules and other pharmaceutical preparations only, over the years they have also become available in food products. The incorporation of these active ingredients in food products that are consumed daily enables the easy and reliable intake of these ingredients for many people.

Plant sterols as such are difficult to formulate into food products due to their poor solubility in oil and immiscibility in water which may result in food products having poor organoleptic properties, e.g. a sandy mouth feel. This made the choice of food products suitable for incorporation of plant sterols very limited. To overcome this drawback plant sterols have been modified to improve their solubility in the fat phase of food products. The most common modification of plant sterols is to their corresponding fatty acid esters. Commercial products such as Becel pro-activ^{tm} and Benecol^{tm} comprise sterol fatty acid esters.

The esterification of plant sterol with fatty acids requires *inter alia* additional processing steps and results in additional costs.

WO 03/043433 A1 describes prepared foods, such a fried snack foods, fortified with non-esterified phytosterols delivered in fats or oils that are essentially free of emulsifiers, and the utility of such phytosterols for stabilizing heated fats and oils against oxidation. The phytosterols have been recrystallized in vegetable oil by cooling by ambient air and results in macro-crystalline structures spanning tens or hundreds of microns. It is stated that the material when tasted has a surprisingly soft and agreeable mouth feel.

WO 2007/030570 relates to food compositions comprising a fat based composition comprising 25 to 75 wt% of triglycerides and 25 to 75 wt% of triglyceride recrystallized phytosterols. The food product may be a spread (claim 12). The phytosterols have been recrystallized in vegetable oil by cooling by ambient air and results in macro-crystalline structures spanning tens or hundreds of microns.

WO 2008/125380 describes fat continuous spreads comprising plant sterol in the form of elongated crystals produced by re-crystallisation from oil. However, the presence of such relatively large crystals is believed to be less suitable because it creates a grainy or sandy mouthfeel, especially upon storage. Furthermore, a slow crystallisation process is required reducing the efficiency of the production process.

EP 897 671 B1 discloses the use of phytosterols or other high melting lipids as structuring agents that make it possible to avoid or minimize the use of saturated fat and other traditional structure-imparting ingredients in food products. The invention relates to an aqueous dispersion or emulsion comprising one or more high melting lipids having a mean size of 15 microns or lower and a non-sterol emulsifier, the w/w ratio of the emulsifier to high melting lipid in said aqueous phase being less than 1:2.

WO 00/41491 discloses that when plant sterols are combined with milk solids in a suspension to obtain coated sterols, this suspension can be used as an aqueous phase for the manufacture of emulsified fat spreads.

It is an object of the present invention to provide an edible fat continuous spread suitable for lowering cholesterol. It is also an object of the invention to provide an edible fat continuous spread suitable for lowering cholesterol that is simple to make and / or requires less process steps. It is a further object of the invention to provide an edible fat continuous spread suitable for lowering cholesterol with an improved structure and / or organoleptic properties.

### Summary of the invention

It was found that one of more of the above mentioned objects is attained by an edible fat continuous spread comprising a combination of a first emulsifier, a second emulsifier and plant sterols.

Surprisingly it was found that the combination of a water soluble emulsifier, a fat soluble emulsifier and plant sterol particles of a certain size allow for an edible fat continuous spread with good organoleptic properties and an increased hardness.

Accordingly in a first aspect the invention relates to an edible fat continuous spread being a water in oil emulsion comprising a water phase and a fat phase, wherein the fat phase comprises liquid oil and a structuring fat, said spread comprising a first emulsifier and a second emulsifier, 5 to 85 wt% fat and 0.1 to 20 wt% plant sterol particles wherein the first emulsifier is a water soluble biopolymer based emulsifier with a molecular weight of at least 500, the second emulsifier is an oil soluble emulsifier and at least 70 vol% of the plant sterol particles is smaller than 10 micrometer.

The invention also relates to a process for the preparation of an edible fat continuous spread.

### Detailed description of the invention

Wt% is calculated on weight of total product unless otherwise specified. For the purpose of the invention ambient temperature is defined as a temperature between 15 and 25 °C. The terms 'oil' and 'fat' are used interchangeably unless specified otherwise. The terms 'plant sterol' and 'phytosterol' are used interchangeably unless specified otherwise.

### Plant sterol particles

Plant sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188.
The respective 5 alpha- saturated derivatives such as sitostanol, campestanol and ergostanol and their derivatives are also encompassed in the term plant sterol.

Preferably the plant sterol is selected from the group comprising β-sitosterol, β-sitostanol, campesterol, campestanol, stigmasterol, brassicasterol, brassicastanol or a mixture thereof. Suitable sources of plant sterols are for example derived from soy bean oil, tall oil, rapeseed oil or combinations of these oils.

In the context of this invention the term plant sterol refers to the free plant sterol, i.e. the non-esterified plant sterol, unless specified otherwise.

The plant sterols particles need to have a certain particle size distribution. In the context of this invention the plant particle size distribution is expressed as volume % (vol%) calculated on total volume of the plant particles below a set particle size in micrometer. At least 70 vol% of the plant sterol particles is smaller than 10 micrometer as this size distribution in combination with a water soluble emulsifier and an oil soluble emulsifier will provide an edible fat continuous spread with an increased hardness. Preferably at least 75 vol%, more preferably at least 80 vol%, even more preferably at least 85 vol%, still more preferably at least 90 vol% and even still more preferably at least 95 vol% of the plant sterol particles are smaller than 10 micrometer.

Suitable methods for reducing the particle size of plant sterols to obtain plant sterols particles with a size distribution according to the invention are well known. These methods can roughly be divided in two approaches: top down and bottom-up. In the top-down approach large particles are broken down to smaller ones using mechanical energy. Examples of such processes are melting and emulsification (e.g. as disclosed in WO0228204), and melt spraying and milling (e.g. as disclosed in WO9858554). In the bottom-up approach molecules, monomers or ions are condensed into a liquid or a solid phase using a physical or a chemical process. Examples of such processes are anti-solvent precipitation (e.g. as disclosed in US 2006/0035871 A1) and Rapid Expansion of a Supercritical Solution (RESS) as (disclosed in WO0021490). Powders can be obtained from the dispersions after drying using spray drying, freeze drying or any other suitable drying method.

The edible fat continuous spread according to the invention comprises 0.1 to 20 wt% plant sterol particles. It will be appreciated that the amount of plant sterol particles can suitable be adjusted to fit e.g. the dietary needs of intended consumer of such a spread. Preferably the amount of plant sterol particles is from 2 to 15 wt%, more preferably from 4 to 10 wt% and even more preferably from 6 to 8 wt%.

### Emulsifiers

Emulsifiers are well known food ingredients and can be divided in two classes, being water soluble emulsifiers and oil soluble emulsifiers. We have found that the combination of at least one water soluble emulsifier and at least one oil soluble emulsifier together with plant sterol particles with a specific particle size distribution allow for edible fat continuous spreads with good organoleptic properties and an increased hardness.

### Water soluble biopolymer based emulsifier

The water soluble emulsifier must be a biopolymer based emulsifier with a molecular weight of at least 500 and preferably the water soluble emulsifier is selected from the group consisting of proteins, glycoproteins, surface active polysaccharides and combinations thereof.

Suitable proteins are plant derived proteins like for example soy protein and animal derived proteins like for example gelatin and milk derived protein. Milk protein is also known as dairy protein. The molecular weight of said proteins can be determined with any of the generally known techniques for such purpose. Preferably the protein is selected from the group consisting of plant derived protein, animal derived protein and combinations thereof.

Preferably the water soluble emulsifier is a milk derived protein, and more preferably the protein comprises whey protein or casein protein, as for example can be found in full milk powder, skimmed milk powder, butter milk powder and sweet whey powder. Standard milk powder comprises about 35 wt% of milk protein. This means that to include for example 0.5 wt% water soluble emulsifier in a spread about 1.4 wt% milk powder has to be added, of course depending on the actual amount of protein present in the milk powder used.

It is possible to use combinations of more than one water soluble emulsifier like for example protein comprising emulsifiers and/or specific milk proteins. This may be desired e.g. to get an optimal flavour and/or nutritional profile. Therefore, the water soluble emulsifier is preferably selected from the group consisting of full milk powder, skim milk powder, butter milk powder, sweet whey powder, whey protein, casein protein and combinations thereof.

Preferably the amount of water soluble emulsifier according to the invention is from 0.01 to 5 wt%, more preferably from 0.1 to 2 wt% and even more preferably from 0.1 to 0.5 wt%.

Preferably the weight ratio of water soluble emulsifier to plant sterol particles is from 10:1 to 1:80, more preferably 8:1 to 1:40, even more preferably 6:1 to 1:20, still more preferably 4:1 to 1:15 and even still more preferably 2:1 to 1:10.

### Oil soluble emulsifier

Suitable oil soluble emulsifiers are oil soluble emulsifiers as used in the production of edible fat continuous spreads. Preferably the oil soluble emulsifier is selected from the group consisting of monoglycerides, diglycerides, lecithin, sorbitan esters, sucrose esters of fatty acids, poly glycerol esters, poly glycerol poly ricinoleate (PGPR) and combinations thereof.

Oil soluble emulsifiers are commonly used in the preparation of fat continuous spreads as they stabilize the desired water in oil emulsion. Likewise, water soluble emulsifiers are used in the preparation of oil in water emulsion, like for example dressings, as these emulsifiers stabilize oil in water emulsions. The Hydrophilic-Lipophilic Balance (HLB) of an emulsifier is a measure of the degree to which it is hydrophilic or lipophilic. An emulsifier having an HLB value of 1 to 8 is usually classified as being a water in oil promoting emulsifier (i.e. oil soluble emulsifier). Emulsifiers with an HLB of more than 8 are oil in water promoting (i.e. water soluble emulsifier).

Preferably the oil soluble emulsifier is a monoglyceride, diglyceride or combination thereof.

Preferably the amount of oil soluble emulsifier is from 0.01 to 5 wt%, more preferably from 0.1 to 2 wt% and even more preferably from 0.1 to 0.5 wt%.

### Fat phase

Edible fat continuous spreads according to the invention are water in oil emulsions that comprise a water phase and a fat phase. Said spread comprises 5 to 85wt% fat. Preferably the amount of fat is from 10 to 80 wt%, more preferably from 15 to 60 wt% and even more preferably from 20 to 50 wt%.

The fat phase comprises liquid oil and structuring fat (i.e. hardstock). The structuring fat structures the fat phase and helps to stabilise the emulsion. The crystallization and melting properties of the structuring fat are important as they influence the stability of the emulsion, e.g. syneresis and plasticity, as well as the organoleptic properties, e.g. oral melting behaviour and flavour release.

It will be appreciated that the amount of structuring fat necessary for imparting structure to an emulsion depends on the total amount of fat phase, the kind of liquid fat, the structuring fat used and the desired structure. For a stable spread a certain amount of structuring fat is necessary. If the amount of structuring fat is too low, a stable emulsion may not be obtained and the resulting emulsion may not comprise the typical plasticity of a spread.

Preferably the amount of structuring fat is from 1 to 20 wt%, more preferably from 2 to 15 wt%, even more preferably from 4 to 12 wt%, still more preferably from 6 to 8 wt% and even still more preferably from 3 to 5 wt%.

The fat may be a single fat or a mixture of different fats. The fat may be of vegetable, animal or marine origin. Preferably at least 50 wt% of the fat (based on total amount of fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the fat essentially consists of fat of vegetable origin.

The fat phase may comprise any suitable oil or fat. Preferred oils and fats are those known for the production of margarine and margarine derivatives such as low fat spreads. The oil and fat are for example selected from the group comprising sunflower oil, rapeseed oil, palm oil, coconut oil, soy bean oil, palm kernel oil, butter fat or a combination thereof. Preferably the liquid oil is selected from the group consisting of sunflower oil, rapeseed oil, soybean oil, linseed oil, maize oil and combinations thereof. Preferably the structuring fat is selected from the group consisting of palm oil, palm kernel oil, coconut oil and combinations thereof.

### Process

In another aspect the invention relates to a process for the preparation of an edible fat continuous spread according to the invention, said process comprising the preparation of an aqueous dispersion comprising plant sterol particles and at least part of the water soluble emulsifier; and the addition of said dispersion to a fat phase or a water in oil emulsion.

It was found that the combination of at least part of a water soluble emulsifier according to the invention and plant sterol particles is required and that this combination of ingredients must be added as an aqueous dispersion. Failure to do so may result in an unstable fat continuous emulsion or no fat continuous emulsion at all.

The aqueous dispersion can be prepared using well established methods as commonly used when preparing fat and water containing emulsions like for example edible fat continuous emulsions. For example a powder comprising plant sterol particles and water soluble emulsifier can simply be added to water under stirring. It is also possible to e.g. add the plant sterol particles and water soluble emulsifier as separate ingredients to water followed by stirring. If required the resulting dispersion may be processed by a microfluidizer to obtain the particle size distribution for the plant sterol particles according to the invention.

The edible fat continuous spread may be prepared according to any method known to the person skilled in the art of making fat continuous spreads comprising the mixing of an aqueous dispersion comprising plant sterol particles and water soluble emulsifier with a fat phase or a water in oil emulsion. The aqueous dispersion may first be added to a second water phase comprising further ingredients and the resulting water phase may then be combined with a fat phase of a water in oil emulsion to obtain the edible fat continuous spread.

For example, a fat continuous spread may be prepared by providing a water phase comprising water and e.g. salt and preservatives, providing a fat phase comprising liquid oil and structuring fat, mixing of the water phase and the fat phase at elevated temperatures at which the fat is fully liquid, subjecting the resulting emulsion to one or more cooling and or working treatments to induce crystallization of the structuring fat to create an emulsion, and mixing the treated emulsion with an aqueous dispersion comprising plant sterol particles and water soluble emulsifier.

One or more of the steps of a typical process for making an emulsion is usually conducted in a process that involves apparatus that allow heating, cooling and mechanical working of the ingredients, such as the churn process or the votator process. The churn process and the votator process are described in Ullmanns Encyclopedia, Fifth Edition, Volume A 16 pages 156-158.

Recently new methods to prepare fat continuous emulsions have been developed that use fat powder comprising at least part of the structuring fat wherein the fat powder is pre-crystallised before it is used to make the emulsion. This eliminates the need to heat and subsequently cool the water phase and fat phase.

Recently new methods to prepare fat continuous emulsions have been developed that use fat powder comprising structuring fat and do not require the need to form the crystal network to make the spread by heating and cooling the whole composition. Such processes have been described previously in for example EP 1865786 A. Said process is characterized in that (part of) the structuring fat is pre-crystallized and does not form from the fat phase (comprising the structuring fat and liquid oil) optionally including the aqueous phase as is the case in conventional ways of preparing a spread using the votator process. One of the main advantages of this process is that it requires less energy to make.

Therefore, preferably the process comprises the step of using fat powder comprising a structuring fat.

Typically such a process comprises the steps of:
a. mixing fat powder and liquid oil wherein the fat powder comprises structuring fat to provide a slurry;
b. providing a water phase;
c. mixing the slurry and water phase to form a water in oil emulsion.

The aqueous dispersion comprising the plant sterol particles and water soluble emulsifier may be added to the water in oil emulsion of step (c) or it may be part of the water phase of step (b).

The fat powder comprises structuring fat and preferably comprises at least 70 wt% of structuring fat, more preferably at least 80 wt%, even more preferably at least 85 wt% , still more preferably at least 90 wt% and even still more preferably at least 95 wt% like for example at least 98 wt%. Most preferably the fat powder essentially consists of structuring fat.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190 and EP1651338.

The process according to the invention is especially beneficial for use with fat powders that have been prepared using a ScMM process. Preferably the fat powder in the process according to the invention is a fat powder obtainable by supercritical melt micronisation.

It is important that the fat powder is not subjected to conditions (e.g. combination of temperature and duration of exposure to that temperature) at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

The use of an aqueous dispersion comprising plant sterol particles and a water soluble emulsifier in the process according to the present invention provides edible fat continuous spreads with novel product features that were not available before.

The invention is now illustrated by the following non limiting examples.

### Examples

### Particle size analysis

Particle size measurements of the aqueous dispersions were performed at 20 degrees Celsius using a static light scattering particle size analyzer (Mastersizer 2000, Malvern Instruments Ltd.).
The aqueous plant sterol dispersion was mixed well, four drops of the dispersion was added to two milliliters of water and mixed well. Subsequently a few drops of the obtained dilution were added to the approximately 130 ml of the measurement cell (Hydro 2000S) of the Mastersizer 2000 until the obscuration was within range. Next the measurement was started. No ultrasound was used before or during the measurement. For calculations the refractive index of sunflower oil (1.4694) and Mastersizer 2000 software version 5.54 was used.

Particle sizes distributions are expressed as volume % below a set particle size in micrometers.

### Stevens value

Stevens values give an indication about the hardness (also called firmness) of a product. The Stevens value is determined according to the following protocol.

The product is stored for 24h at 15 degrees Celsius before measurements are done. The hardness of the product is measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. The probe is pushed into the product at a speed of 2 mm/s, a trigger force of 5 gram from a distance of 10 mm. The force required is read from the digital display and is expressed in grams.

### Emulsion stability

The emulsion stability was assessed by visual inspection of oil exudation, water exudation and growth of water droplet size measured as raise in value of D3.3 and E^sigma after 1 week storage.

### Spreads

Spreads with a composition according to Tables 1 and 2 were made using the process as described below.

**Table 1, Spread composition (parts, w/w)**

| AQUEOUS PHASE | Example 1 and comparative examples A - C | Comparative example D and E |
|---|---|---|
| Tap water | 27.47 | 31.3 |
| Waxy maize starch | 2 | - |
| Tapioca starch | - | 2.5 |
| Salt (NaCl) | 1 | 0.2 |
| Plant sterol dispersion | 34.1 | 30 |
| Potassium sorbate | 0.13 | 0.1 |
| Sunflower oil | 1 | - |
| Dimodan R-T/B | 0.15 | - |
| Dimodan HP | 0.15 | - |
| Sweet whey powder | - | 0.4 |
| TOTAL | 66 | 64.5 |
| | | |

| FAT PHASE | | |
|---|---|---|
| Sunflower oil | 29.55 | 29.5 |
| Fat powder | 4.3 | - |
| Hard stock | - | 5.3 |
| Dimodan HP | - | 0.2 |
| Lecithin | - | 0.15 |
| Poly glycerol poly ricinoleate | - | 0.1 |
| Colorant | 0.15 | 0.15 |
| Flavor | Trace | 0.1 |
| TOTAL | 34 | 35.5 |

| | | |
|---|---|---|
| Dimodan® HP: molecularly distilled mono/diacylglyceride mixture derived from fully hardened palm oil (90% monoglyceride) ex Danisco DK. Dimodan® R-T/B: molecularly distilled mono/diacylglyceride mixture derived from hardened Rapeseed oil (90% monoglyceride) ex Danisco, DK. Fat powder is a fat powder that was obtained using a supercritical melt micronisation process similar to the process described in 'Particle formation of ductile materials using the PGSS technology with supercritical carbon dioxide', P.Münüklü, Ph.D.Thesis, Delft University of Technology, 16-12-2005, Chapter 4, pp. 41-51; using an interesterified mixture of 65% dry fractionated palm oil stearin with an Iodine Value of 14 and 35% palm kernel oil. Hard stock used was an interesterified mixture of 65% dry fractionated palm oil stearin with an Iodine Value of 14 and 35% palm kernel oil. | | |

**Table 2, Plant sterol dispersion composition (parts, w/w)**

| | Example 1, Comparative example A and B | Comparative example C | Comparative example D | Comparative example E |
|---|---|---|---|---|
| Plant sterol | 22 | 22 | 25 | 25 |
| Emulsifier | 1.86 skim milk powder | 2.44 sodium stearoyl lactylate | 2.78 Polysorbate 60 | 1.39 Polysorbate 60 |
| Tap water | To balance | To balance | To balance | To balance |
| TOTAL | 100 | 100 | 100 | 100 |

### Preparation of aqueous dispersion comprising plant sterol particles

29.8 kg of Vegapure F90 ME (ex Cognis; containing 91.3% plant sterol and 7.7% skimmed milk powder (SMP)) was added to 85.2 kg of demineralised water at room temperature. The mixture was stirred in a pre-mix vessel using a blade stirrer. This resulted in a dispersion having a size distribution of 1 vol% < 10 micrometer and 85 vol% < 220 micrometer. A part of this dispersion was taken apart and stored at 5 degrees Celsius and used for comparative example A.

The remaining part of the dispersion was processed by a microfluidizer (Microfluidics® M7125-20), equipped with only the auxiliary cell T60Z at 950 bar. This resulted in a dispersion having a particle size distribution of 57 vol% < 10 micrometer and 85 vol% < 70 micrometer. A part of this dispersion was taken apart and stored at 5 degrees Celsius and used for comparative example B.

The remaining part of the dispersion was additionally processed by the microfluidizer, but now equipped with auxiliary cell T60Z and down stream the interaction cell H10Z-8 and at a pressure of 1400 bar. After the interaction cell the dispersion was cooled to approximately 10 degrees Celsius using a heat exchanger. This was followed by 4 additional cycles at 1400 bar using both the auxiliary cell and the interaction cell to obtain sufficient particle size reduction. This resulted in a dispersion having a particle size distribution of 85 vol% < 10 micrometer. The dispersion was stored at 5 degrees Celsius and used for example 1.

For comparative example C an aqueous dispersion of 22.44 wt% plant sterol and sodium stearoyl lactylate (SLL) was used wherein the weight ratio of plant sterol to SLL was 9 to 1.

Dispersions were made by heating the plant sterol at 150 degrees Celsius in an oven until completely molten. Next polysorbate 60 was added and stirred with a spatula. The obtained liquid plant sterol-polysorbate mixture was slowly poured into hot water of about 95 degrees Celsius under stirring with an Ultra-turrax high speed mixer. After addition of the plant sterol-polysorbate liquid the mixture was allowed to cool down to room temperature under stirring of the Ultra-turrax. The obtained dispersion was homogenised (Niro Soavi, NS2002H) at 250 bar and a second cycle at 500 bar. Subsequently the thus obtained dispersion was cycled 10 times over the microfluidizer (M-110S, Microfluidics) at 1200 bar, using a Z-configuration type interaction chamber (G10Z). The final dispersions had a particle size distribution of 95 vol% < 10 micrometer. These dispersions were used for comparative examples D and E.

**Table 3, Particle size distribution (vol%)**

| Example 1 | 85 vol% < 10 micrometer |
|---|---|
| Comparative example A | 1 vol% < 10 micrometer and 85 vol% < 220 micrometer |
| Comparative example B | 57 vol% < 10 micrometer and 85 vol% smaller than 70 micrometer |
| Comparative example C | Not determined |
| Comparative example D | 95 vol% < 10 micrometer |
| Comparative example E | 95 vol% < 10 micrometer |

### Example 1 and Comparative examples A to C

### Preparation of fat phase

The fat powder was added to the liquid oil while stirring. The oil temperature was about 15 degrees Celsius. Vacuum was applied to remove all dissolved air from the resulting slurry. Subsequently colour and flavour were added to the slurry.

### Preparation of the aqueous phase

The oil soluble emulsifiers were added to the sunflower oil while heating to dissolve the emulsifiers (as listed under aqueous phase in Table 1).The mix of sunflower and oil soluble emulsifier, together with starch, salt and potassium polysorbate, were added to the water under elevated temperature while stirring. After the resulting mixture cooled down to about 15 to 20 degrees Celsius the aqueous dispersion comprising the plant sterol particles as described above was added.

### Preparation of emulsion

Both the fat phase and the aqueous phase were pumped to a mixing unit (pin-stirrer). The residence time in the pin-stirrer unit was between 10 and 110 seconds. The products so obtained at the exit of the pin-stirrer unit were stored at 5 degrees Celsius.

### Comparative examples D and E

Fat phase ingredients were stirred at 60 degrees Celsius in a premix tank. Aqueous phase ingredients were separately stirred at 60 degrees Celsius in a second premix tank. Both the fat phase and the aqueous phase were pumped into a standard votator line (AAC configuration). The products so obtained at the exit of the votator line were stored at 5 degrees Celsius.

**Table 4, product properties**

| | Emulsion stability | Stevens value |
|---|---|---|
| Example 1 | + | 140 |
| Comparative example A | + | 92 |
| Comparative example B | + | 89 |
| Comparative example C | No fat continuous emulsion obtained, product was water continuous | # |
| Comparative example D | No fat continuous emulsion obtained. No differentiated water droplets in a continuous fat phase but a mixture of water rich areas in fat phase. | # |
| Comparative example E | No fat continuous emulsion obtained. No differentiated water droplets in a continuous fat phase but a mixture of water rich areas in fat phase. | # |

| | | |
|---|---|---|
| # Not determined as no fat continuous product was obtained. | | |

## Claims

1. An edible fat continuous spread being a water in oil emulsion comprising a water phase and a fat phase, wherein the fat phase comprises liquid oil and a structuring fat, said spread comprising a first emulsifier and a second emulsifier, 5 to 85 wt% fat and 0.1 to 20 wt% plant sterol particles **characterized in that** wherein the first emulsifier is a water soluble biopolymer based emulsifier with a molecular weight of at least 500, the second emulsifier is an oil soluble emulsifier and at least 70 vol% of the plant sterol particles is smaller than 10 micrometer.

2. Spread according to claim 1 wherein the water soluble emulsifier is selected from the group consisting of proteins, glycoproteins, surface active polysaccharides and combinations thereof.

3. Spread according to claim 1 wherein the water soluble emulsifier is selected from the group consisting of full milk powder, skim milk powder, butter milk powder, sweet whey powder, whey protein, casein protein and combinations thereof.

4. Spread according to any one of claims 1 to 3 wherein the oil soluble emulsifier is selected from the group consisting of monoglycerides, diglycerides, lecithin, sorbitan esters, sucrose esters of fatty acids, poly glycerol esters, poly glycerol poly ricinoleate (PGPR) and combinations thereof.

5. Spread according to any one of claims 1 to 4 wherein at least 75 vol%, preferably at least 80 vol%, more preferably at least 85 vol%, even more preferably at least 90 volt and still more preferably at least 95 vol% of the plant sterol particles are smaller than 10 micrometer.

6. Spread according to any one of claims 1 to 5 wherein the amount of fat is from 10 to 80 wt%, preferably from 15 to 60 wt% and more preferably from 20 to 50 wt%.

7. Spread according to any one of claim 1 to 6 wherein the amount of structuring fat is from 1 to 20 wt%, preferably from 2 to 15 wt%, more preferably from 4 to 12 wt%, even more preferably from 6 to 8 wt% and still more preferably from 3 to 5 wt%.

8. Spread according to any one of claims 1 to 7 wherein the amount of plant sterol particles is from 2 to 15 wt%, preferably from 4 to 10 wt% and more preferably from 6 to 8 wt%.

9. Spread according to any one of claims 1 to 8 wherein the amount of water soluble emulsifier is from 0.01 to 5 wt%, preferably from 0.1 to 2 wt% and more preferably from 0.1 to 0.5 wt%.

10. Spread according to any one of claims 1 to 9 wherein the amount of oil soluble emulsifier is from 0.01 to 5 wt%, preferably from 0.1 to 2 wt% and more preferably from 0.1 to 0.5 wt%.

11. Spread according to any one of claims 1 to 10 wherein the weight ratio of water soluble emulsifier to plant sterol particles is from 10:1 to 1:80, preferably 8:1 to 1:40, more preferably 6:1 to 1:20, even more preferably 4:1 to 1:15 and still more preferably 2:1 to 1:10.

12. Process for the preparation of an edible fat continuous spread according to any one of claims 1 to 11, said process comprising the preparation of an aqueous dispersion comprising plant sterol particles and at least part of the water soluble emulsifier; and the addition of said dispersion to a fat phase or a water in oil emulsion.

13. Process according to claim 12 comprising the step of using fat powder comprising a structuring fat.

14. Process according to claim 13 wherein the fat powder is a fat powder obtainable by supercritical melt micronisation.

## Patentansprüche

1. Essbarer Aufstrich mit kontinuierlicher Fettphase, der eine Wasser-in-Öl-Emulsion ist, die eine wässrige Phase und eine Fettphase aufweist, wobei die Fettphase flüssiges Öl und ein strukturbildendes Fett aufweist, wobei der Aufstrich einen ersten Emulgator und einen zweiten Emulgator, 5 bis 85 Gew.-% Fett und 0,1 bis 20 Gew.-% Teilchen von pflanzlichem Sterol aufweist,
**dadurch gekennzeichnet, dass** der erste Emulgator ein wasserlöslicher, auf einem Biopolymer basierende Emulgator mit einem Molekulargewicht von mindestens 500 ist, der zweite Emulgator ein öllöslicher Emulgator ist und mindestens 70 Vol.-% der Teilchen von pflanzlichem Sterol kleiner als 10 µm sind.

2. Aufstrich nach Anspruch 1,
wobei der wasserlösliche Emulgator aus der Gruppe ausgewählt ist, die aus Proteinen, Glycoproteinen, oberflächenaktiven Polysacchariden und Kombinationen davon besteht.

3. Aufstrich nach Anspruch 1,
wobei der wasserlösliche Emulgator aus der Gruppe ausgewählt ist, die aus Vollmilchpulver, Magermilchpulver, Buttermilchpulver, Süßmolkepulver, Molkeprotein, Casein-Protein und Kombinationen davon besteht.

4. Aufstrich nach einem der Ansprüche 1 bis 3,
wobei der öllösliche Emulgator aus der Gruppe ausgewählt ist, die aus Monoglyceriden, Diglyceriden, Lecithin, Sorbitanestern, Saccharoseestern von Fettsäuren, Polyglycerolestern, Polyglycerolpolyricinoleat (PGPR) und Kombinationen davon besteht.

5. Aufstrich nach einem der Ansprüche 1 bis 4,
wobei mindestens 75 Vol.-%, vorzugsweise mindestens 80 Vol.-%, stärker bevorzugt mindestens 85 Vol.-%, noch stärker bevorzugt mindestens 90 Vol.-% und noch stärker bevorzugt mindestens 95 Vol.-% der Teilchen von pflanzlichem Sterol kleiner als 10 µm sind.

6. Aufstrich nach einem der Ansprüche 1 bis 5,
wobei die Fettmenge 10 bis 80 Gew.-%, vorzugsweise 15 bis 60 Gew.-% und stärker bevorzugt 2 bis 50 Gew.-% beträgt.

7. Aufstrich nach einem der Ansprüche 1 bis 6,
wobei die Menge an strukturbildendem Fett 1 bis 20 Gew.-%, vorzugsweise 2 bis 15 Gew.-%, stärker bevorzugt 4 bis 12 Gew.-%, noch stärker bevorzugt 6 bis 8 Gew.-% und noch stärker bevorzugt 3 bis 5 Gew.-% beträgt.

8. Aufstrich nach einem der Ansprüche 1 bis 7,
wobei die Menge der Teilchen von pflanzlichem Sterol 2 bis 5 Gew.-%, vorzugsweise 4 bis 10 Gew.-% und stärker bevorzugt 6 bis 8 Gew.-% beträgt.

9. Aufstrich nach einem der Ansprüche 1 bis 8,
wobei die Menge an wasserlöslichem Emulgator 0,01 bis 5 Gew.-%, vorzugsweise 0,1 bis 2 Gew.-% und stärker bevorzugt 0,1 bis 0,5 Gew.-% beträgt.

10. Aufstrich nach einem der Ansprüche 1 bis 9,
wobei die Menge an öllöslichem Emulgator 0,01 bis 5 Gew.-%, vorzugsweise 0,1 bis 2 Gew.-% und stärker bevorzugt 0,1 bis 0,5 Gew.-% beträgt.

11. Aufstrich nach einem der Ansprüche 1 bis 10,
wobei das Gewichtsverhältnis zwischen wasserlöslichem Emulgator und Teilchen von pflanzlichem Sterol 10:1 bis 1:80, vorzugsweise 8:1 bis 1:40, stärker bevorzugt 6:1 bis 1:20, noch stärker bevorzugt 4:1 bis 1:15 und noch stärker bevorzugt 2:1 bis 1:10 beträgt.

12. Verfahren zum Herstellen eines essbaren Aufstrichs mit kontinuierlicher Fettphase nach einem der Ansprüche 1 bis 11,
wobei das Verfahren das Herstellen einer wässrigen Dispersion, die Teilchen von pflanzlichem Sterol und zumindest einen Teil des wasserlöslichen Emulgaors aufweist, und das Zugeben der Dispersion zu einer Fettphase oder einer Wasser-in-Öl-Emulsion aufweist.

13. Verfahren nach Anspruch 12,
das den Schritt des Verwendens von Fettpulver aufweist, das ein strukturbildendes Fett aufweist.

14. Verfahren nach Anspruch 13,
wobei das Fettpulver ein solches ist, das durch Feinstzerkleinern einer superkritischen Schmelze erhalten werden kann.

## Revendications

1. Pâte à tartiner continue de graisse comestible étant une émulsion eau-dans-huile comprenant une phase d'eau et une phase de graisse, dans laquelle la phase de graisse comprend une huile liquide et une graisse structurante, ladite pâte à tartiner comprenant un premier émulsifiant et un second émulsionnant, de 5 à 85 % en poids de graisse et de 0,1 à 20 % en poids de particules de stérol végétal **caractérisée en ce que** le premier émulsionnant est un émulsionnant à base de bio-polymère soluble dans l'eau avec une masse moléculaire d'au moins 500, le second émulsionnant est un émulsionnant soluble dans l'huile et au moins 70 % en volume des particules de stérol végétal sont inférieurs à 10 micromètres.

2. Pâte à tartiner selon la revendication 1, dans laquelle l'émulsionnant soluble dans l'eau est choisi dans le groupe constitué de protéines, de glycoprotéines, de polysaccharides tensioactifs et de combinaisons de ceux-ci.

3. Pâte à tartiner selon la revendication 1, dans laquelle l'émulsionnant soluble dans l'eau est choisi dans le groupe constitué d'une poudre de lait entier, d'une poudre de lait écrémé, d'une poudre de babeurre, d'une poudre de petit-lait sucrée, d'une protéine de petit-lait, d'une protéine de caséine et de combinaisons de celles-ci.

4. Pâte à tartiner selon l'une quelconque des revendications 1 à 3, dans laquelle l'émulsionnant soluble dans l'huile est choisi dans le groupe constitué de monoglycérides, de diglycérides, de lécithine, d'esters de sorbitane, d'esters de saccharose d'acides gras, de polyglycérolesters, de poly(ricinoléate) de polyglycérol (PGPR) et de combinaisons de ceux-ci.

5. Pâte à tartiner selon l'une quelconque des revendications 1 à 4, dans laquelle au moins 75 % en volume, de préférence au moins 80 % en volume, encore mieux au moins 85 % en volume, bien mieux encore au moins 90 % en volume et particulièrement de préférence au moins 95 % en volume des particules de stérol végétal sont inférieurs à 10 micromètres.

6. Pâte à tartiner selon l'une quelconque des revendications 1 à 5, dans laquelle la quantité de graisse est de 10 à 80 % en poids, de préférence de 15 à 60 % en poids et encore mieux de 20 à 50 % en poids.

7. Pâte à tartiner selon l'une quelconque des revendications 1 à 6, dans laquelle la quantité de graisse structurante est de 1 à 20 % en poids, de préférence de 2 à 15 % en poids, encore mieux de 4 à 12 % en poids, bien mieux encore de 6 à 8 % en poids et de préférence particulièrement de 3 à 5 % en poids.

8. Pâte à tartiner selon l'une quelconque des revendications 1 à 7, dans laquelle la quantité de particules de stérol végétal est de 2 à 15 % en poids, de préférence de 4 à 10 % en poids, et encore mieux de 6 à 8 % en poids.

9. Pâte à tartiner selon l'une quelconque des revendications 1 à 8, dans laquelle la quantité d'émulsionnant soluble dans l'eau est de 0,01 à 5 % en poids, de préférence de 0,1 à 2 % en poids et encore mieux de 0,1 à 0,5 % en poids.

10. Pâte à tartiner selon l'une quelconque des revendications 1 à 9, dans laquelle la quantité d'émulsionnant soluble dans l'huile est de 0,01 à 5 % en poids, de préférence de 0,1 à 2 % en poids et encore mieux de 0,1 à 0,5 % en poids.

11. Pâte à tartiner selon l'une quelconque des revendications 1 à 10, dans laquelle le rapport massique de l'émulsionnant soluble dans l'eau aux particules de stérol végétal est de 10:1 à 1:80, de préférence de 8:1 à 1:40, encore mieux de 6:1 à 1:20, bien mieux encore de 4:1 à 1:15 et particulièrement de préférence de 2:1 à 1:10.

12. Procédé pour la préparation d'une pâte à tartiner continue de graisse comestible selon l'une quelconque des revendications 1 à 11, ledit procédé comprenant la préparation d'une dispersion aqueuse comprenant des particules de stérol végétal et au moins une partie de l'émulsionnant soluble dans l'eau ; et l'addition de ladite dispersion à une phase de graisse ou à une émulsion eau-dans-huile.

13. Procédé selon la revendication 12 comprenant l'étape d'utilisation d'une poudre de graisse comprenant une graisse structurante.

14. Procédé selon la revendication 13, dans lequel la poudre de graisse est une poudre de graisse pouvant être obtenue par micronisation à l'état fondu supercritique.
